# EUROPEAN PATENT SPECIFICATION

(11) **EP 4 055 210 B1**
(45) Date of publication and mention of the grant of the patent: **25.10.2023**
(21) Application number: 20811720.0
(22) Date of filing: 28.10.2020
(51) Int. Cl.: C25B 1/22, C25B 1/245, C25B 9/19, C03C 15/00, C04B 41/00, C04B 41/91, C04B 41/53

(54) **SYSTEM FOR MODIFYING THE SURFACE PROPERTIES OF MATERIALS**
SYSTEM ZUR MODIFIZIERUNG DER OBERFLÄCHENEIGENSCHAFTEN VON MATERIALIEN
SYSTÈME DE MODIFICATION DES PROPRIÉTÉS DE SURFACES DE MATÉRIAUX

(30) Priority: 04.11.2019 IT 201900020252
(43) Date of publication of application: 14.09.2022
(73) Proprietor: R.E R. Group S.r.l., 36016 Thiene (VI) (IT)
(72) Inventor: RIZZO, Alessandro, 36034 Malo (VI) (IT); RIZZO, Gianpietro, 36033 Isola Vicentina (VI) (IT)
(74) Representative: Ziliotto, Tiziano
(86) International application number: PCT/IB2020/060076
(87) International publication number: WO 2021/090112

(56) References cited:
- US-A1- 2011 143 549
- US-A1- 2018 148 332

## Description

### TECHNICAL FIELD OF THE INVENTION

The present invention concerns the systems for modifying the surface properties of materials.

More specifically, the present invention concerns the treatments carried out on floors to give their walking surface anti slip properties.

Even more specifically, the present invention concerns the treatments carried out on horizontal and/or vertical surfaces to modify their mechanical and/or optical properties.

This system makes it possible to treat surfaces before and after they are laid.

### DESCRIPTION OF THE STATE OF THE ART

The modification of the surface properties of materials often results in the opportunity to find new application purposes for said materials. In particular, the increase of the friction coefficient can bring some advantages that can be exploited in different sectors. In greater detail, increased grip can make a support more resistant to slipping. This characteristic, therefore, is useful in the field of anti slip surfaces. Furthermore, the increase of the friction coefficient of materials is directly related to a modification of the roughness of the same. This causes light to be reflected by the support in a different manner, modifying its optical properties. This characteristic is extremely important when it comes to change the appearance of the support as it happens, for example, in the glass frosting process. Thus, the modification of the surface properties of materials has several fields of application.

Anti slip systems are known in which the surface, preferably a walking surface, has friction coefficients that are such as to prevent slipping.

By way of example, the case of plane surfaces is considered.

According to a first known solution, to obtain an anti slip flooring plastic strips are used which contain rigid granules in a polymeric material or quartz capable of increasing the friction coefficient on the walking area, and which are glued onto the flooring. The problems of this solution are related to the need to position these strips at a distance of maximum 5 cm from one another, as required by the safety regulations in force. There are also problems related to the measurement of the friction coefficient on such a narrow strip according to the B.C.R.A. standard applied in Italy or the DIN and ASTM standards used in Europe and the United States. The life cycle of these strips is very short and depends only on the adhesion of the same to the floor, that is, only on the resistance of the used glue to delamination. Furthermore, the granules embedded in the polymeric matrix of the strips can gradually sink into the polymeric matrix due to wear. This causes the friction coefficient to lower slowly and gradually over time.

Another solution of the known type consists in the cold hammering of the surface, carried out by means of a violent jet of spherical micro balls or cylinders. The machines that carry out this treatment project the jet towards the surfaces to be processed through one or more centrifugal impellers rotating rapidly or through compressed air. The materials used for the shots can be cast iron, steel, glass.

This type of processing results in the mechanical removal of the first layer of material of the support. The processed surface achieves a high degree of roughness which leads to an increase in the friction coefficient but also to great difficulty in cleaning. Furthermore, the actual removal of a layer of material may cause structural damages to the support and make it more easily chipped.

A further solution of the known type is represented by bushhammering, which is performed using a special hammer called bushhammer having a hardened steel head with small and thick pyramidal (or even conical) points. Stone cutters used to hit the support repeatedly with this tool to obtain an irregular surface with the typical "rough" and natural appearance, which changed according to the size of the points. Nowadays the bushhammer has been replaced by pneumatic hammers whose end is provided with special interchangeable diamond plates. This type of processing leads to a mechanical modification of the outermost layer of the support, increasing its roughness and consequently its friction coefficient. The increase of this value, however, involves a proportional increase in cleaning difficulty. The removal of a layer of material, as in the case of micro shot peening, increases the risk of the material chipping or suffering structural damage.

According to another solution, anti slip mats are used which consist of a mat provided with a button-patterned surface. These types of products have stability problems over time. They are laid on the ground by embedding them in the floor. These products, however, being made of a plastic material, tend to become deformed over time and to create an unstable support due to the vibrations and treading to which they are subjected. Furthermore, being difficult to clean, they become a receptacle for bacteria.

A different kind of solution concerns the application of substances to the surface to be treated.

A first known solution is constituted by surface resin coating, according to which epoxy or polyurethane resins with quartz or polymer-based granules dispersed therein are directly applied to the surface.

The main defect of this solution lies in that the granules have low resistance to treading. The granules penetrate in the resin matrix over time, thus losing their anti slip effect. Furthermore, the resin itself can slowly wear out or lose grip, in particular in "high traffic" areas.

Another known solution is constituted by the use of swelling chemical compounds. These products offer a solution constituted by dendrimers or nanosponges capable of penetrating in the surface pores and swell out of the cavity at the moment when they come into contact with a precursor. The asperities formed on the surface become rigid, thus producing an anti slip effect. These products need to be activated through contact with a "precursor" solution having the correct temperature, concentration or pH. In some cases, the swelling takes place in the absence of special conditions but it can be activated in the presence of the correct solvent. The problem linked to the use of these products is represented by their low resistance over time when subjected to prolonged treading. The air volumes projecting from the pores tend to wear out or to become round, thus losing their anti slip effect. Furthermore, these solutions need a specific disposal system.

A further known solution is constituted by surface etching, in which an acid solution is applied which is capable of interacting with the material creating cusps that increase the friction coefficient on the surface. These types of systems have defects related to the fact that the solutions are very acid and cannot be directly disposed of but require a specific recovery, neutralization and successive disposal treatment.

Furthermore, this solution poses the drawback of the extremely high concentrations of residuum, which remains active and deposited on the treated surface. In order to remove the exhausted product from the surface, a washing cycle with water is usually carried out to dilute the residuum. After the washing cycle, the quantity of acid present in the solution decreases, but in any case remains sufficiently high to be dangerous owing to its high corrosiveness. In the case where the treatment is carried out on outdoor floors, the solution can reach the ground around the installation area. This results in contamination of the water-bearing strata, aggression against the flora or danger for animals. For this reason, it is necessary to carry out a special process to recover these mixtures and then neutralize and dispose of them. The washing solutions need to be conveniently recovered even when the treatment is performed indoors. These warnings are not heeded, very often due to the operators' negligence or to their desire to avoid possible additional costs, and the washing waters are disposed of directly in the domestic or industrial sewage systems or into the ground.

In addition to modifying the mechanical properties of the material, the techniques listed above modify also the aesthetic appearance of the support. There are also other methods not listed herein which allow this type of modification, for example the sandblasting or mechanical engraving of the surface. The sandblasting technique is a mechanical processing method thanks to which it is possible to make decorations, engravings, glazing effects or simply to matt the surface of the material (increased grip). The support can be masked to protect the sensitive areas that must not be treated and can be subjected, by means of a sandblasting machine, to an air jet containing corundum (aluminium oxide), which abrades the contact area. This system can be effective but becomes difficult to use with certain materials and on vertical supports. Similarly, it is possible to engrave the support mechanically by means of the micro milling technique. This method is implemented using micro millers in carborundum (silicon carbide) or tungsten carbide grinders to engrave the support. Said technique, however, is difficult to apply and to replicate, since the result depends on the "steady hand" of the operator, and furthermore requires long execution times.

In general, all the solutions of the known type pose a first type of problem related to the cleaning difficulty and to the resistance of the anti slip effect or of the aesthetic result over time. Furthermore, some techniques require the use of very corrosive materials and/or materials which are very difficult to dispose of.

The main object of the present invention is thus to solve or at least partially overcome the problems that characterize the solutions known in the art.

It is a first object of the present invention to propose a solution that makes it possible to treat surfaces so as increase their friction coefficient and to reduce or eliminate the environmental impact of the treatment itself, making it more "biocompatible".

It is another object of the present invention to propose a surface treatment which makes it possible to reduce the required processing times.

It is a further object of the present invention to propose a surface treatment which makes it possible to reduce costs compared to the surface treatments of the known type.

Document US 2018/0148332 A1 discloses a method for producing diluted hydrofluoric acid using an electrode arrangement. Document US 2011/0143549 Al discloses an etching apparatus for producing an etching solution.

### SUMMARY OF THE PRESENT INVENTION

The present invention is based on the general consideration according to which the problems observed in the state of the art can be at least partially overcome using a system for modifying the surface properties of a surface of a material by means of an electrochemical process.

Thus, according to a main aspect of the present invention the subject of the same is a method as defined in claim 1.

Preferably, said step of positioning said anode or said cathode on said surface to be treated comprises the positioning of said anode or said cathode in direct contact with said surface to be treated.

In a preferred embodiment, said step of associating an electrolyte in the liquid phase with one or more of the layers comprises first the step of associating an electrolyte in the solid phase with one or more of the layers and successively the step of adding a liquid to form the electrolyte in the liquid phase.

According to another aspect of the present invention, the same concerns a device as defined in claim 4.

Preferably, the intermediate layer allows the gradual passage of a solution containing an electrolyte and preferably said intermediate layer comprises a porous layer.

In a preferred embodiment, said at least one among said layers comprises the electrolyte in the liquid phase or in the solid phase.

According to a preferred embodiment, the device comprises pressing means. Preferably, said pressing means comprise a layer in a heavy material.

In a preferred embodiment, the device comprises masking means suited to be interposed between said anode or said cathode and said surface to be treated, said masking means comprising masking areas comprising material which is inert with respect to the chemical compounds of said electrolyte and open areas without material.

Preferably, the intermediate layer comprises one or more of the materials belonging to the group comprising: paper and cellulose pulp-based or lignin-based systems; paper and cellulose pulp-based or lignin-based systems loaded with polymeric fibres; fabrics; knit fabrics made of any material, having a mesh size that is such as to allow the passage of a liquid, for example jersey; non-woven fabrics; porous and/or filtering polymeric materials; porous and/or filtering natural and synthetic rubbers; inorganic materials, for example mica; porous and/or filtering vitrified or ceramic materials.

Preferably, the first layer and/or the second layer comprise/s an electrically conductive material, preferably a metallic material, carbon and its derivatives, or biomaterials, more preferably comprise/s graphite cloth or graphite felt.

The metallic material preferably comprises transition metals, alkali and alkaline earth metals (or alloys of these metals).

Preferably, said electrolyte comprises:
- at least one among the acid compounds/ions, or solutions containing said compounds/ions, belonging to the group comprising: perchloric acid, hydroiodic acid, hydrobromic acid, hydrochloric acid, sulphuric acid, nitric acid, iodic acid, oxalic acid, sulphurous acid, hydrogen sulphate ion, phosphoric acid, d-tartaric acid, lactic acid, citric acid, nitrous acid, hydrofluoric acid, hydrogen fluoride ion, formic acid, 1-ascorbic acid, benzoic acid, acetic acid, carbonic acid, hydrogen sulphite ion, hydrogen sulfide, dihydrogen phosphate ion, hypochlorous acid, boric acid, hydrogen carbonate ion, hydrogen sulfide ion, hydrogen phosphate ion, malic acid;
   and/or
- at least one among the basic compounds/ions, or solutions containing said compounds/ions, comprising the hydroxyl ion; and/or
- at least one among the salts, or solutions containing said salts, belonging to the group comprising: perchlorate, iodide, bromide, chloride, sulfate, nitrate, iodate, oxalate, sulfite, bisulfate, phosphate, tartrate, lactate, citrate, nitrite, fluoride, bifluoride, formate, ascorbate, benzoate, acetate, carbonate, hydrogen sulfite, sulfide, dihydrogen phosphate, hypochlorite, borate, hydrogen carbonate, hydrogen sulfide, hydrogen phosphate, malate.

The surfaces that can be treated are preferably in a ceramic material, enameled or non-enameled, or stone or glass.

According to a preferred embodiment, the device comprises power supply means for said cathode and said anode.

In a preferred embodiment, the device comprises a sensor suited to measure the degree of surface modification.

Preferably, the device comprises moving means, preferably a handle or a mechanized system.

According to a preferred embodiment, the device comprises supporting means for said layers, preferably one or more supporting rollers.

In a preferred embodiment, the device comprises dispensing means suited to dispense said electrolyte in the liquid phase or water dispensing means if said electrolyte is present in the solid phase and/or washing/rinsing means and/or liquid suction means.

According to another aspect of the present invention, the same concerns an equipment as defined in claim 16.

According to a preferred embodiment, the supporting means for the manufactured item comprise a conveyor belt suited to handle the manufactured item.

In a preferred embodiment, the moving means comprise a press associated with the supporting means of the device.

Preferably, the supporting means of the device comprise one or more rollers. According to a preferred embodiment, the equipment comprises also means for washing the manufactured item and/or means for packaging the manufactured item once it has been treated.

### BRIEF DESCRIPTION OF THE DRAWINGS

Further advantages, objects and characteristics as well as further embodiments of the present invention are defined in the claims and will be clarified below through the following description, with reference to the enclosed drawings; in the drawings, corresponding or equivalent characteristics and/or component parts of the present invention are identified by the same reference numbers. In particular, in the drawings:
- Figure 1 shows an axonometric view of a device according to a first preferred embodiment that implements the method of the invention;
- Figure 2 shows a plan view, from above, of the device of Figure 1;
- Figure 3 shows a sectional view of Figure 2 according to line III- III;
- Figure 4 shows an exploded view of Figure 3;
- Figure 5 shows a variant embodiment of Figure 4;
- Figure 6 shows an axonometric view from below of a device constituted by the layers shown in Figure 5;
- Figure 7 shows a side plan view of a device according to another preferred embodiment of the invention;
- Figure 8 shows another plan view of the device of Figure 7;
- Figures from 9 to 11 show side plan views of devices according to preferred embodiments of the invention;
- Figure 12 shows another plan view of the device of Figure 11;
- Figure 13 shows a schematic view of a device carried out according to a further embodiment of the invention;
- Figure 14 shows an axonometric view of a device carried out according to the schematic view of Figure 13;
- Figure 15 shows an axonometric view of a piece of equipment that implements the method of the invention according to a first preferred embodiment;
- Figure 16 shows a variant embodiment of Figure 15;
- Figure 17 shows a variant embodiment of Figure 7.

### DETAILED DESCRIPTION OF THE PRESENT INVENTION

Even though the present invention is described below with reference to its embodiments illustrated in the drawings, the present invention is not limited to the embodiments described below and represented in the drawings. On the contrary, the embodiments described and represented herein clarify some aspects of the present invention, the scope of which is defined in the claims.

The present invention has proved to be particularly advantageous when used for walking surfaces. It should, however, be pointed out that the present invention is not limited to walking surfaces. On the contrary, the present invention may be applied in all those cases in which it is necessary to treat surfaces in general, therefore not only walking surfaces such as floors, and in which a specific value of the friction coefficient is required.

The application of the invention is especially convenient in all those cases in which floors situated outdoors must be treated, possibly already existing floors.

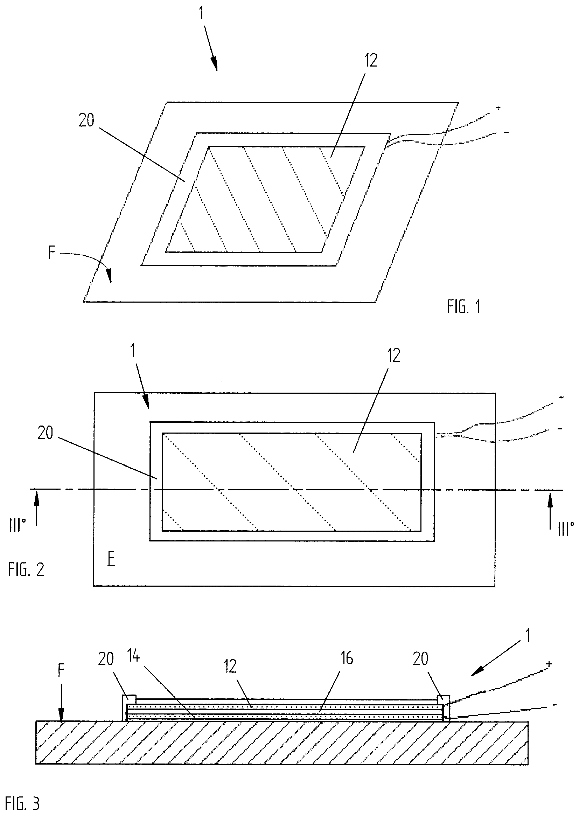

Figure 1 shows a floor whose walking surface F is preferably treated according to the invention by means of a device 1 according to a preferred embodiment of the invention.

In said preferred embodiment, the treatment consists in modifying the friction coefficient of the surface F in a pre-existing floor on site, advantageously increasing said coefficient.

By way of example, the floor may be constituted by a floor made of stone or ceramic or glass, for example a footpath outside a house.

In preferred variant embodiments, the treatment is carried out directly on tiles designed to be successively laid according to the intended use, as explained also further on in the description.

The device 1 according to the preferred embodiment of the invention preferably comprises a first layer 12, or upper layer, a second layer 14, or lower layer, and an intermediate layer 16.

The first layer 12 preferably comprises an electrically conductive material suited to serve the function of a cathode.

The second layer 14 preferably comprises an electrically conductive material suited to serve the function of an anode.

The intermediate layer 16 preferably comprises a porous layer which, thanks to its characteristics, allows the gradual passage of a solution containing an electrolyte designated also as electrolyte in the liquid phase. The intermediate layer 16 thus comprises a layer suited to become impregnated with an electrolyte in the liquid phase or to regulate its flow.

The three layers 12, 14, 16 actually define an electrochemical cell.

The device 1 according to the invention, as described in greater detail below, makes it possible to treat the surface F of the floor by means of an electrochemical process.

For this purpose, at least one among said layers 12, 14, 16 is suited to receive an electrolyte in the liquid phase or in the solid phase.

In the case where the electrolyte is already incorporated in the device 1 in the liquid phase, meaning that the device 1 is pre-impregnated, the device 1 is ready for the treatment.

In the case where the electrolyte is incorporated in the device 1 in the solid phase, a liquid, for example water, is added to the device 1 before the treatment in order to obtain the electrolyte solution (electrolyte in the liquid phase).

In a further situation, the device 1 may contain no electrolyte at all. In this case, the electrolyte in the liquid phase is added to the device 1 before the treatment. Preferably, the three layers 12, 14, 16 are kept in a mutually fixed position through a peripheral edge 20 that surrounds the layers 12, 14, 16 themselves.

In variant embodiments, the three layers 12, 14, 16 can be preferably kept in a mutually fixed position through different and/or equivalent locking methods such as, for example, gluing, electric welding, heat welding, sewing etc.

The first and/or the second layer 12, 14, cathode and anode, comprise any electrode that is useful to obtain water electrolysis or more generally any electrically conductive material, preferably a metallic material, carbon and its derivatives, or biomaterials. For example, the first and/or the second layer 12, 14 comprise/s graphite cloth, consisting of thin cloth with narrow-mesh warp and weft, or graphite felt, meaning a non-woven fabric needled with graphite fibres. Preferably, the metallic material comprises transition metals, alkali and alkaline earth metals (or alloys of these metals).

Graphite felt is advantageously used to make the electrode positioned in the upper part of the electrochemical cell.

In an embodiment of the invention, for example the one shown in Figure 3, the device 1 is positioned on the surface to be treated F with the lower layer 14 (anode) resting on the surface F itself. In this configuration, during the process positive ions which allow the surface F to be treated are brought to the anode 14. In variant embodiments, not shown herein, the device can be positioned on the surface to be treated in such a way that the layer serving as a cathode rests on the surface itself. In this configuration, during the process negative ions which allow the surface F to be treated are brought to the cathode.

When the electrolyte, be it in the liquid or in the solid phase, is incorporated in advance in the device 1, it can be positioned in any of the three main components (12, 14 and 16), provided that they have the required characteristics, so that it serves as an immobilization layer.

The intermediate layer 16, as already explained above, has a certain degree of porosity that is suited to allow the gradual passage of a solution containing an electrolyte.

The intermediate layer 16 preferably comprises one or more of the following materials:
- paper and cellulose pulp-based or lignin-based systems;
- paper and cellulose pulp-based or lignin-based systems loaded with polymeric fibres;
- fabrics;
- knit fabrics made of any material, having a mesh size that is such as to allow the passage of a liquid, for example jersey;
- non-woven fabrics;
- porous and/or filtering polymeric materials;
- porous and/or filtering natural and synthetic rubbers;
- inorganic materials, for example mica;
- porous and/or filtering vitrified or ceramic materials.

The electrolytes suited to be used for the treatment preferably comprise any salt or chemical compound soluble in water and/or another suitable polar solvent. Fluorides soluble in water are preferably used, more preferably ammonium fluoride NH4F.

The concentration of the liquid electrolyte solution, be it already incorporated in the device or obtained by adding water to the salts incorporated in the device 1 in dry conditions or prepared separately from the device 1 and added to the latter at the moment when the treatment is carried out, will have suitable values within a preferred interval. For example, in the case of use of ammonium fluoride it is preferably included between 0.001% and 0.20% in weight.

Electrolytes that can be used for the treatment are specified in the tables below. The preferred concentration intervals are also indicated for each electrolyte. This treatment can work with any suitable electrolyte, but it is also possible to exploit the electrolysis of water to bring H+ ions to the anode or OH- ions to the cathode. The electrolytic process can work also with pure water, distilled water and deionized water but these are not good conductors and most of the current would thus be dissipated without obtaining an effective result of the surface modification treatment.

Furthermore, with this technology it is possible to speed up the traditional treatments and make them more effective, even if in any case they need a specific disposal process.

Table 1 specifies acid compounds/ions, or solutions containing such compounds/ions, suited to be used as electrolytes in the treatment according to the invention. These electrolytes can be used when the electrode that is in contact with the surface to be treated is the anode.

Table 2 specifies acid compounds/ions, or solutions containing such compounds/ions, suited to be used as electrolytes in the treatment according to the invention. These electrolytes can be used when the electrode that is in contact with the surface to be treated is the cathode.

Table 3 specifies salts, or solutions containing such salts, suited to be used as electrolytes in the treatment according to the invention. Said electrolytes can be used placing either the cathode or the anode in contact with the surface to be treated. The three tables below specify, under the wording "RANGE 1", the concentration values of the laboratory tested chemical compounds as a percentage of the weight. The wording "RANGE 2", instead, indicates the concentration values of the chemical compounds tested through the prototypes as a percentage of the weight.

**Table 1**

| **COMPOUND** | **FORMULA** | **RANGE 1** | **RANGE 2** |
|---|---|---|---|
| Perchloric acid | HClO₄ | 0.0001 - 20% | 0.0001-10% |
| Hydroiodic acid | HI | 0.0001 - 20% | 0.0001-10% |
| Hydrobromic acid | HBr | 0.0001 - 20% | 0.0001-10% |
| Hydrochloric acid | HCl | 0.0001 - 40% | 0.0001-20% |
| Sulphuric acid | H₂SO₄ | 0.0001 - 30% | 0.0001-15% |
| Nitric acid | HNO₃ | 0.0001 - 22% | 0.0001-10% |
| Iodic acid | HIO₃ | 0.0001 - 20% | 0.0001-10% |
| Oxalic acid | H₂C₂O₄ | 0.0001 - 20% | 0.0001-10% |
| Sulphurous acid | H₂SO₃ | 0.0001 - 20% | 0.0001-10% |
| Hydrogen sulphate ion | HSO₄⁻ | 0.0001 - 20% | 0.0001-10% |
| Phosphoric acid | H₃PO₄ | 0.0001 - 80% | 0.0001-70% |
| D-tartaric acid | H₂C₄H₄O₆ | 0.0001 - 20% | 0.0001-10% |
| Lactic acid | HC₃H₅O₃ | 0.0001 - 20% | 0.0001-10% |
| Citric acid | H₃C₆H₅O₇ | 0.0001 - 20% | 0.0001-10% |
| Nitrous acid | HNO₂ | 0.0001 - 20% | 0.0001-10% |
| Hydrofluoric acid | HF | 0.0001 - 30% | 0.0001-20% |
| Hydrogen fluoride ion | HF₂⁻ | 0.0001 - 30% | 0.0001-20% |
| Formic acid | HCOOH | 0.0001 - 20% | 0.0001-10% |
| L-ascorbic acid | H₂C₆H₆O₆ | 0.0001 - 20% | 0.0001-10% |
| Benzoic acid | C₆H₅COOH | 0.0001 - 20% | 0.0001-10% |
| Acetic acid | CH₃COOH | 0.0001 - 80% | 0.0001-50% |
| Carbonic acid | H₂CO₃ | 0.0001 - 15% | 0.0001-10% |
| Hydrogen sulphite ion | HSO₃⁻ | 0.0001 - 20% | 0.0001-10% |
| Hydrogen sulfide | H₂S | 0.0001 - 20% | 0.0001-10% |
| Dihydrogen phosphate ion | H₂PO₄⁻ | 0.0001 - 40% | 0.0001-10% |
| Hypochlorous acid | HClO | 0.0001 - 20% | 0.0001-10% |
| Boric acid | H₃BO₃ | 0.0001 - 20% | 0.0001-10% |
| Hydrogen carbonate ion | HCO₃⁻ | 0.0001 - 20% | 0.0001-10% |
| Hydrogen sulfide ion | HS⁻ | 0.0001 - 20% | 0.0001-10% |
| Hydrogen phosphate ion | HPO₄²⁻ | 0.0001 - 40% | 0.0001-10% |
| Malic acid | C₄H₆O₅ | 0.0001 - 20% | 0.0001-10% |

**Table 2**

| **COMPOUND** | **FORMULA** | **HYDROXIDE COMPOUNDS** | **RANGE 1** | **RANGE 2** |
|---|---|---|---|---|
| Hydroxide ion or hydroxil ion | OH⁻ | LiOH, NaOH, KOH, Be(OH)₂, Mg(OH)₂, Ca(OH)₂, NH₄OH | 0.0001 - 40% | 0.0001 - 30% |

**Table 3**

| **COMPOUND** | **SALT COMPOUNDS** | **RANGE 1** | **RANGE 2** |
|---|---|---|---|
| Perchlorate | LiClO₄, NaClO₄, KClO₄, Mg(ClO₄)₂, Ca(ClO₄)₂, Be(ClO₄)₂, NH₄ClO₄ | 0.0001 - 20% | 0.0001 - 10% |
| Iodide | LiI, NaI, KI, BeI₂, MgI₂, CaI₂, NH₄I | 0.0001 - 20% | 0.0001 - 10% |
| Bromide | LiBr, NaBr, KBr, BeBr₂, MgBr₂, CaBr₂, NH₄Br, AlBr₃ | 0.0001 - 20% | 0.0001 - 10% |
| Chloride | LiCl, NaCl, KCl, BeCl₂, MgCl₂, CaCl₂, NH₄Cl | 0.0001 - 40% | 0.0001 - 20% |
| Sulfate | Li₂SO₄, Na₂SO₄, K₂SO₄, BeSO₄, MgSO₄, CaSO₄, (NH₄)₂SO₄ | 0.0001 - 30% | 0.0001 - 15% |
| Nitrate | LiNO₃, NaNO₃, KNO₃, Be(NO₃)₂, Mg(NO₃)₂, Ca(NO₃)₂, NH₄NO₃ | 0.0001 - 22% | 0.0001 - 10% |
| Iodate | LiIO₃, NaIO₃, KIO₃, Be(IO₃)₂, Mg(IO₃)₂, Ca(IO₃)₂, NH₄IO₃ | 0.0001 - 20% | 0.0001 - 10% |
| Oxalate | Li₂C₂O₄, Na₂C₂O₄, K₂C₂O₄, BeC₂O₄, MgC₂O₄, CaC₂O₄, (NH₄)₂C₂O₄ | 0.0001 - 20% | 0.0001 - 10% |
| Sulfite | Li₂SO₃, Na₂SO₃, K₂SO₃, BeSO₃, MgSO₃, CaSO₃, (NH₄)₂SO₃ | 0.0001 - 20% | 0.0001 - 10% |
| Bisulfate | LiHSO₄, NaHSO₄, KHSO₄, Be(HSO₄)₂, Mg(HSO₄)₂, Ca(HSO₄)₂, NH₄HSO₄ | 0.0001 - 20% | 0.0001 - 10% |
| Phosphate | Li₃PO₄, Na₃PO₄, K₃PO₄, Be₃(PO₄)₂, Mg₃(PO₄)₂, Ca₃(PO₄)₂, (NH₄)₃PO₄ | 0.0001 - 80% | 0.0001 - 70% |
| Tartrate | Li₂C₄H₄O₆, Na₂C₄H₄O₆, K₂C₄H₄O₆, MgC₄H₄O₆, CaC₄H₄O₆, (NH₄)₂C₄H₄O₆ | 0.0001 - 20% | 0.0001 - 10% |
| Lactate | LiC₃H₅O₃, NaC₃H₅O₃, KC₃H₅O₃, Mg(C₃H₅O₃)₂, Ca(C₃H₅O₃)₂, NH₄C₃H₅O₃ | 0.0001 - 20% | 0.0001 - 10% |
| Citrate | Li₃C₆H₅O₇, Na₃C₆H₅O₇, K₃C₆H₅O₇, Mg(C₆H₅O₇)₂, Ca(C₆H₅O₇)₂, NH₄C₆H₃O₇ | 0.0001 - 20% | 0.0001 - 10% |
| Nitrite | LiNO₂, NaNO₂, KNO₂, Be(NO₂)₂, Mg(NO₂)₂, Ca(NO₂)₂, NH₄NO₂ | 0.0001 - 20% | 0.0001 - 10% |
| Fluoride | LiF, NaF, KF, BeF₂, MgF₂, CaF₂, NH₄F | 0.0001 - 30% | 0.0001 - 20% |
| Bifluoride | LiHF₂, NaHF₂, KHF₂, Be(HF₂)₂, Mg(HF₂)₂, Ca(HF₂)₂, NH₄HF₂ | 0.0001 - 30% | 0.0001 - 20% |
| Formate | HCOOLi, HCOONa, HCOOK, Mg(HCOO)₂, Ca(HCOO)₂, HCOONH₄ | 0.0001 - 20% | 0.0001 - 10% |
| Ascorbate | Li₂C₆H₆O₆, Na₂C₆H₆O₆, K₂C₆H₆O₆, MgC₆H₆O₆, CaC₆H₆O₆, (NH₄)₂C₆H₆O₆ | 0.0001 - 20% | 0.0001 - 10% |
| Benzoate | C₆H₅COONa, C₆H₅COOK, Mg(C₆H₅COO)₂, Ca(C₆H₅COO)₂, C₆H₅COONH₄ | 0.0001 - 20% | 0.0001 - 10% |
| Acetate | CH₃COOLi, CH₃COONa, CH₃COOK, Mg(CH₃COO)₂, Ca(CH₃COO)₂, CH₃COONH₄ | 0.0001 - 80% | 0.0001 - 50% |
| Carbonate | Li₂CO₃, Na₂CO₃, K₂CO₃, MgCO₃, CaCO₃, BeCO₃, (NH₄)₂CO₃ | 0.0001 - 15% | 0.0001 - 10% |
| Hydrogen sulfite | LiHSO₃, NaHSO₃, KHSO₃, Mg(HSO₃)₂, Ca(HSO₃)₂, NH₄HSO₃ | 0.0001 - 20% | 0.0001 - 10% |
| Sulfide | Li₂S, Na₂S, K₂S, BeS, MgS, CaS, (NH₄)₂S | 0.0001 - 20% | 0.0001 - 10% |
| Dihydrogen phosphate | LiH₂PO₄, NaH₂PO₄, KH₂PO₄, Mg(H₂PO₄)₂, Ca(H₂PO₄)₂, | 0.0001 - 40% | 0.0001 - 10% |
| Hypochlorite | LiClO, NaClO, KClO, Be(ClO)₂, Mg(ClO)₂, Ca(ClO)₂, NH₄ClO | 0.0001 - 20% | 0.0001 - 10% |
| Borate | Li₃BO₃, Na₃BO₃, K₃BO₃, Be₃(BO₃)₂, Mg₃(BO₃)₂, Ca₃(BO₃)₂, (NH₄)₃BO₃ | 0.0001 - 20% | 0.0001-10% |
| Hydrogen carbonate | LiHCO₃, NaHCO₃, KHCO₃, Be(HCO₃)₂, Mg(HCO₃)₂, Ca(HCO₃)₂, NH₄HCO₃ | 0.0001 - 20% | 0.0001 - 10% |
| Hydrogen sulfide | LiHS, NaHS, KHS, Be(HS)₂, Mg(HS)₂, Ca(HS)₂, NH₄HS | 0.0001 - 20% | 0.0001 - 10% |
| Hydrogen phosphate | Li₂HPO₄, Na₂HPO₄, K₂HPO₄, BeHPO₄, MgHPO₄, CaHPO₄, (NH₄)₂HPO₄ | 0.0001 - 40% | 0.0001 - 10% |
| Malate | C₄H₄O₅Li₂, C₄H₄O₅Na₂, C₄H₄O₅K₂, C₄H₄O₅Mg, C₄H₄O₅Ca, C₄H₄O₅(NH₄)₂ | 0.0001 - 20% | 0.0001 - 10% |

Some methods for treating the walking surface F are described below with reference to the preferred embodiment of the device 1 of the invention.

In a first preferred embodiment, the device 1 is pre-impregnated and incorporates the electrolyte in the liquid phase, thus ready for the treatment, for example an aqueous solution of ammonium fluoride in a percentage in weight equal to 1.6%. The device 1 is made adhere to the walking surface F with the anode 16 facing the surface F.

Preferably, the anode 16 is placed in direct contact with the surface to be treated so that it can adhere in the best possible way.

Cathode and anode are powered electrically in order to have an electric current flow with suitable intensity from the cathode to the anode and to provide a suitable quantity of charge. The density of the treatment current is preferably included between 0.001 and 1500 A/m2 in order to supply, preferably, a quantity of charge included between 0.001 and 150 Ah/m2. Table 4 below specifies the application values for these two parameters. The intervals which can be used for the process are specified under the wording "RANGE 3" and indicate all the current density values and the charge quantity values which can be provided to the system to start the treatment, the intervals under the wording "RANGE 4" specify the values tested in the laboratory tests and the intervals under the wording "RANGE 5" specify the values tested in the developed prototypes.

**Table 4**

| **MEASURED QUANTITY** | **RANGE 3** | **RANGE 4** | **RANGE 5** | **UNIT** |
|---|---|---|---|---|
| Current density | 0.001 - 1500 | 0.001 - 1000 | 0.001 - 800 | A/m² |
| Quantity of charge | 0.001 - 150 | 0.001 - 100 | 0.001 -80 | Ah/m² |

The passage of current starts the electrochemical process, and the electrolyte is activated. The formation of acid or base takes place at the level of the anode or cathode, meaning in proximity to the surface to be treated F. The deposition on the anode or cathode thus makes it possible to modify the morphology of the surface F to increase its friction coefficient. The modification treatment continues as long as the current flows between cathode and anode. Once the current flow has been interrupted, the reaction and the formation of acid or base end in a short time, according to the quantity of oxygen available.

The treatment can produce different surface modifications, based on its duration, the nature of the layers, in particular the nature of the intermediate layer 16, the intensity of the current and the concentration of the electrolyte.

Thanks to the activation effect through electrolysis, the quantity of surface chemical residue at the end of the treatment is lower if compared to the known techniques and will probably have a concentration below the limit allowed for domestic sewage systems. At the end of the treatment it will be sufficient to rinse the treated surface F to remove any possible trace of residuum from the surface F. The washing water can be directly and advantageously discharged in the sewage system without causing any environmental damage or consequence.

If it were necessary to treat a ceramic surface, enameled or vitrified, it would be advantageous, for example, to use a system with the anode positioned in the lower layer (Figure 3), applying an electrolyte solution containing fluorides (for example, NH4F). The use of said salts makes it possible to avoid the direct application of acids (for example, HF) with high concentrations and in high quantities on the surface to be treated. This technology exploits the electrochemical process to promote the formation of acid on site, starting from low concentrations of electrolyte dispersed in solution. For example, ammonium fluoride is much less aggressive than hydrofluoric acid or other fluorides such as ammonium bifluoride, with a further advantage in terms of residue removal and the consequent environmental impact. Thanks to the electrochemical treatment, furthermore, treatment times are considerably reduced compared to the known technique. This can take place effectively both with other electrolytes that create traces of acid on the anode and with electrolytes that create traces of base on the cathode.

Still to advantage, application precision is considerably increased, and the treatment area is clearly identified by the geometric shape of the device 1. The figures show a substantially square device, however it is evident that this shape must not be considered limitative in any way and, on the contrary, in variant embodiments the device can assume any other desired shape such as, for example, rectangular shapes or shapes requiring a specific pattern of the anti slip areas to be obtained.

Considering again, by way of example, a surface modification treatment carried out with fluorides (for example, NH4F), it is possible to implement an application method different from the one described above. In the case previously considered bv way of example, the device 1 incorporates the electrolyte in the solid phase. Preferably, the electrolyte in the solid phase is incorporated in the first layer 12 (cathode) or in the intermediate layer 16 if the anode is positioned against the surface. If, instead, the system has the cathode against the surface, the electrolyte in the solid phase is preferably positioned in the anode 14 or in the intermediate layer 16. The device 1 is made adhere to the walking surface F with the anode facing the surface F. Successively, a suitable quantity of water is applied to the device 1 in order to create the electrolyte solution, for example the quantity necessary to preferably obtain, for example, an aqueous solution of ammonium fluoride at 1.6% in weight. The application of water on the device is preferably carried out as homogeneously as possible, for example using a sprayer, a nebulizer or an atomizer.

Once the desired electrolyte solution has been obtained, the cathode and the anode can be powered electrically to start the electrolytic process and carry out the treatment on the surface F, analogously to what has been described above. According to another treatment method, different from the previously described one, the device 1 does not incorporate the electrolyte in any layer, neither in the solid nor in the liquid phase. The device 1 is made adhere to the walking surface F with the anode facing the surface F. Successively, a suitable quantity of electrolyte solution prepared separately, for example an aqueous solution of ammonium fluoride at 1.6% in weight, is applied to the device 1.

The application of the solution on the device is preferably carried out as homogeneously as possible, for example using a sprayer, a nebulizer or an atomizer.

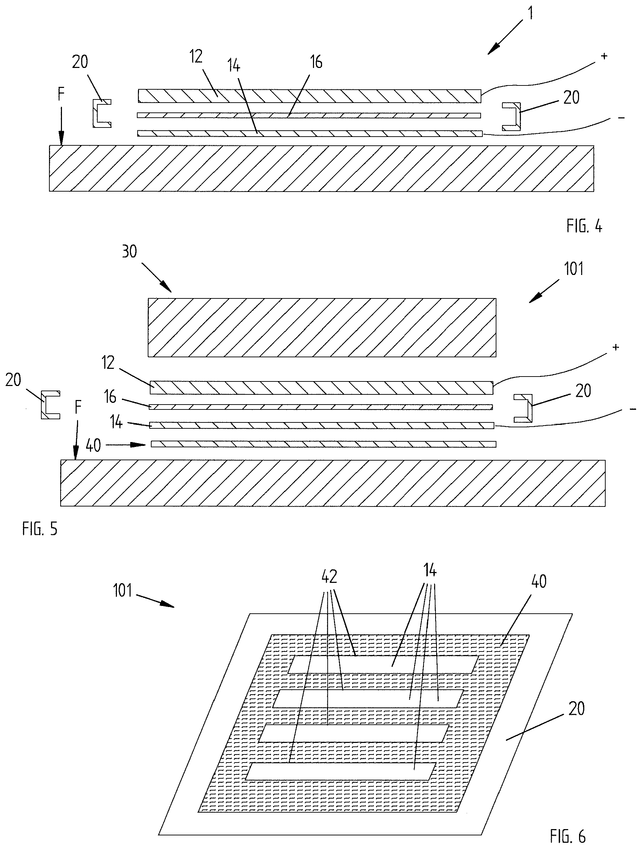

Once the desired electrolyte solution has been obtained, the cathode and the anode can be powered electrically to start the electrolytic process and carry out the treatment on the surface F, analogously to what has been described above. Figures 5 and 6 show a variant embodiment 101 of the device according to the invention.

In the device 101 carried out according to said embodiment one or more additional layers are used.

Preferably, the device 101 comprises pressing means 30 capable of exerting a force/weight on the underlying layers. Preferably, the pressing means 30 comprise a pressing layer made of a heavy material, for example metallic materials, plastic materials or any material with an intrinsic weight capable of exerting a pressure, preferably of approximately 0.1 kg/cm², uniformly distributed on the entire surface of the device 101.

Advantageously, said weight guarantees the desired adhesion of the electrode in the lower layer, for example of the anode 14 in Figure 1, against the surface F during the treatment. According to a preferred embodiment, as shown in the figure, the pressing layer 30 is positioned on top of all the other layers 12, 14, 16, in such a way as to cover them over their entire extension. In variant embodiments, however, the pressing means can be positioned in other areas of the device, for example as a further intermediate layer (uniformly holed material), or at the level of the peripheral edge.

Preferably, the device 101 comprises masking means 40 capable of creating areas of exclusion from the treatment for the surface F and of defining a particular pattern of the areas where the electrochemical process must be carried out.

The masking means 40 preferably comprise a layer of material which is inert with respect to the chemical compounds used in the electrolytic process and is provided with suitable openings/windows 42 where the treatment should desirably produce its effect. Figure 6 shows a possible embodiment of the masking layer 40, provided with 4 rectangular openings 42 which create respective rectangular strips with different friction coefficients on the surface to be treated F.

For the sake of simplicity of explanation, the device 101 shown in Figure 5 comprises both the pressing means 30 and the masking means 40. In variant embodiments, however, the device may comprise only one of them, either the pressing means or the masking means, and not necessarily both of them.

For the implementation of the treatment according to the invention, the device is powered through a suitable power supply system, not illustrated herein, which provides the current necessary for the electrolytic process. A preferred embodiment makes use of a DC power supply or an AC power supply with suitable transformer and rectifier. The power supply preferably comprises power supply batteries. In variant embodiments, the power supply can be connected to the electric network through a cable.

In a preferred embodiment, the device that is the subject of the invention comprises means for signalling that the treatment has been completed, for example a LED or an acoustic warning device.

The signalling means are connected to an electronic/computerized system in which the operator can input the process parameters. The treatment depends on the application time of the electrochemical system. More specifically, it is possible to evaluate the time necessary to reach a given friction coefficient based on the current intensity used, the charge density and the concentration of the electrolyte used. Preferably, it is also possible to get an idea of the involved times through the electronic/computerized system. Once the treatment has been started and the established time has elapsed, the LED or acoustic warning device is activated, meaning that the desired surface modification has been obtained. This is advantageously followed by the rinsing operations intended to remove any possible trace of residuum from the treated surface.

In a further preferred embodiment, the device comprises a sensor suited to measure the degree of surface modification. Said sensor makes it advantageously possible to understand whether the treatment has been effective or not.

For this purpose, the device comprises a system for measuring some parameters that make it possible to understand what is the condition of the floor surface before and after the treatment. The main parameters that can be measured by means of suitable systems can be, for example: light reflection; static or dynamic friction coefficient; brightness; roughness; contact angle.

Furthermore, the device preferably comprises an electronic/computerized system capable of providing information to the operator regarding the parameters of use of the device, based on the type of support to be treated, thanks to the information contained in a large database. These two factors allow the operator to perform the treatment in the best possible way, setting the parameters in a consistent manner according to the type of surface and the final result to be achieved, for example the current intensity, the concentrations of electrolyte solution, the treatment time, the pressure force etc.

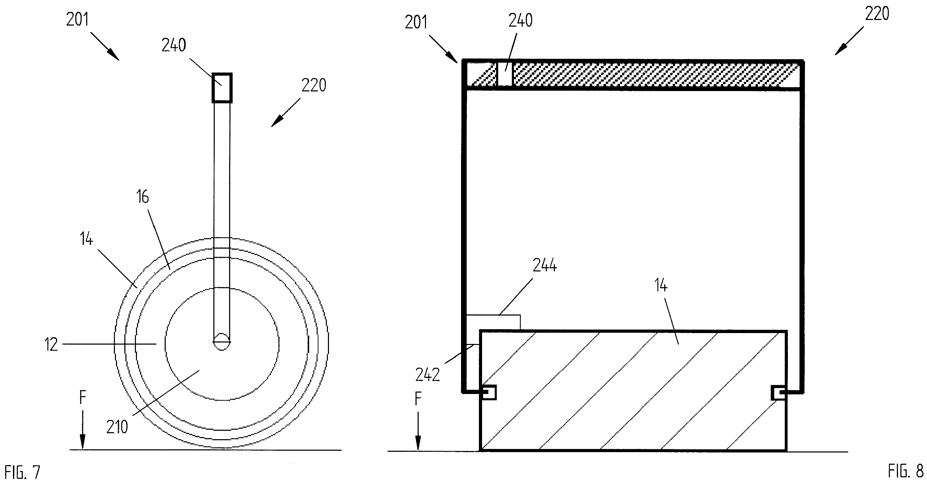

Figures 7 and 8 show a device 201 according to a variant embodiment of the invention.

In the drawings, characteristics and/or component parts corresponding or equivalent to those of previous embodiments are identified by the same reference numbers.

The device 201 according to said preferred embodiment of the invention preferably comprises a first layer 12, a second layer 14 and an intermediate layer 16.

Supporting means 210, preferably comprising a roller, accommodate said layers 12, 14, 16 in a wound configuration.

Said layers 12, 14, 16 have the same characteristics described above with reference to the device 1 of Figure 1, meaning that the first layer 12 serves as a cathode, the second layer 14 serves as an anode and the intermediate layer 16 allows the gradual passage of a solution containing an electrolyte.

The device 201 preferably comprises moving means 220 suited to facilitate the displacement/rolling movement of the roller 210 and the layers 12, 14, 16 on the surface F to be treated. The moving means 220 preferably comprise a handle or equivalent mechanized systems suited to be grasped by a user to push the device 201 on the surface F to be treated.

Furthermore, the device 201 preferably comprises power supply means 240.

The power supply means 240 preferably comprise a DC power supply or an AC power supply with suitable transformer and rectifier. The power supply 240 preferably comprises power supply batteries. In variant embodiments, the power supply can be connected to the electric network through a cable.

The power supply means 240 preferably comprise a sliding contact 242 that touches the first layer 12 (cathode) and a sliding contact 244 adhering to the external surface of the second layer 14 (anode) so as to create a closed circuit for the passage of current in the electrochemical process.

The device 201 can be used as previously described, depending on the presence or absence of the electrolyte in/from one of the layers 12, 14, 16 wound on the roller 210.

According to a specific use of the device 201, a quantity of solution containing the electrolyte is sprayed directly on the surface F of the flooring to be treated and then the device 201 is moved over the surface F. During the movement of the device 201, the solution previously sprayed on the surface F penetrates the layers 12, 14, 16 and allows the electrolytic process to take place and the desired treatment to be carried out.

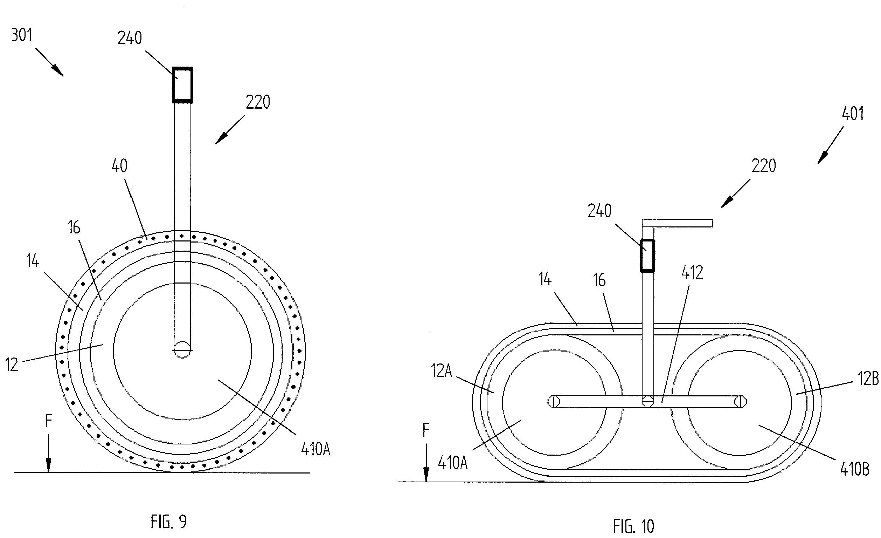

Figure 9 shows a device 301 according to a variant embodiment of the invention. In the drawings, characteristics and/or component parts corresponding or equivalent to those of previous embodiments are identified by the same reference numbers.

Said embodiment differs from the embodiment previously described with reference to Figures 7 and 8 in that it comprises also an external masking layer 40.

The masking layer 40, analogously to what has been described above, is capable of creating areas of exclusion from the treatment for the surface F and of defining a special pattern of the treated areas.

The masking layer 40 preferably comprises a layer of material which is inert with respect to the chemical compounds used in the electrolytic process, provided with suitable openings/windows 42 where the treatment should desirably produce its effect.

Figure 10 shows a device 401 according to a variant embodiment of the invention.

In the drawings, characteristics and/or component parts corresponding or equivalent to those of previous embodiments are identified by the same reference numbers.

The device 401 according to said preferred embodiment of the invention preferably comprises a first supporting roller 410A on which a first layer 12A is wound and a second supporting roller 410B on which a first layer 12B is wound. The two rollers 410A, 410B are coupled horizontally through supporting means 412 that extend upwards in a moving handle 220.

The device 401 comprises also a second layer 14 and an intermediate layer 16 wound so as to form a ring around the two rollers 410A and 410B and over the respective first layers 12A, 12B.

Said layers 12A, 12B, 14, 16 have the same characteristics described above with reference to the device 1 of Figure 1, meaning that the first layers 12A, 12B serve as a cathode, the second layer 14 serves as an anode and the intermediate layer 16 allows the gradual passage of a solution containing an electrolyte.

Furthermore, the device 401 preferably comprises power supply means 240.

The power supply means 240 preferably comprise a DC power supply or an AC power supply with suitable transformer and rectifier. The power supply 240 preferably comprises power supply batteries. In variant embodiments, the power supply can be connected to the electric network through a cable.

The power supply means 240 preferably comprise one pair of contacts (sliding or non-sliding) touching respective first electrodes (layer 12 - cathode) and one contact (sliding or non-sliding) adhering to the external surface of the second electrode (layer 14 - anode) so as to create the closed circuit for the passage of current in the electrochemical system.

The device 401 can be used as previously described, depending on the presence or absence of the electrolyte in/from one of the layers 12A, 12B, 14, 16 wound on the rollers 410A and 410B.

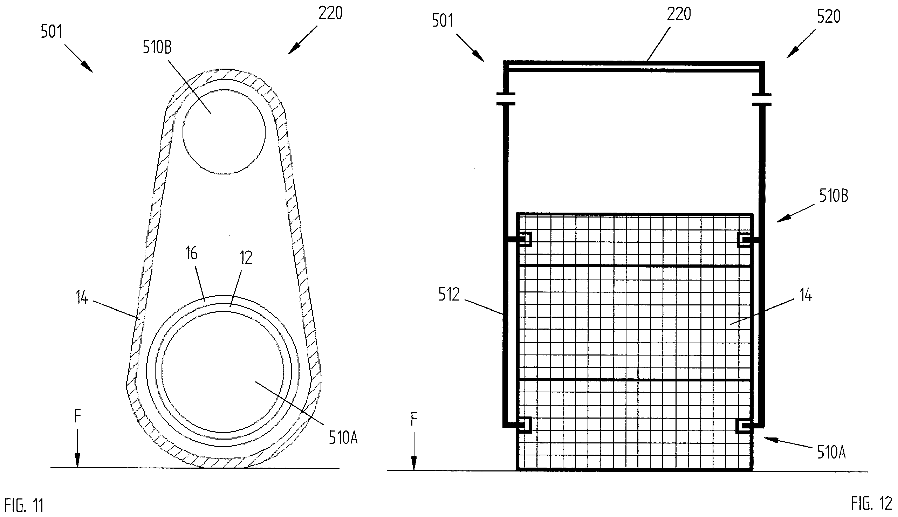

Figures 11 and 12 show a device 501 according to a variant embodiment of the invention.

In the drawings, characteristics and/or component parts corresponding or equivalent to those of previous embodiments are identified by the same reference numbers.

The device 501 according to said preferred embodiment of the invention preferably comprises a first supporting roller 510A and a second supporting roller 510B coupled vertically through supporting means 512 that extend upwards in a moving handle 220.

A first layer 12 (cathode) and an intermediate layer 16 are wound on the first supporting roller 510A. A second layer 14 (anode) is wound as a ring around the two rollers 510A and 510B.

Said layers 12, 14, 16 have the same characteristics described above with reference to the device 1 of Figure 1, meaning that the first layer 12 serves as a cathode, the second layer 14 serves as an anode and the intermediate layer 16 allows the gradual passage of a solution containing an electrolyte.

The device 501 preferably comprises also power supply means, not shown herein.

The power supply means preferably comprise a DC power supply or an AC power supply with suitable transformer and rectifier. The power supply preferably comprises power supply batteries. In variant embodiments, the power supply can be connected to the electric network through a cable.

The power supply means preferably comprise a sliding or non-sliding contact that touches the first layer 12 (cathode) and a sliding or non-sliding contact adhering to the external surface of the second layer 14 (anode), so as to create the closed circuit for the passage of current in the electrochemical process.

The device 501 can be used as previously described, depending on the presence or absence of the electrolyte in/from one of the layers 12, 14, 16 wound on the rollers 510A and 510B.

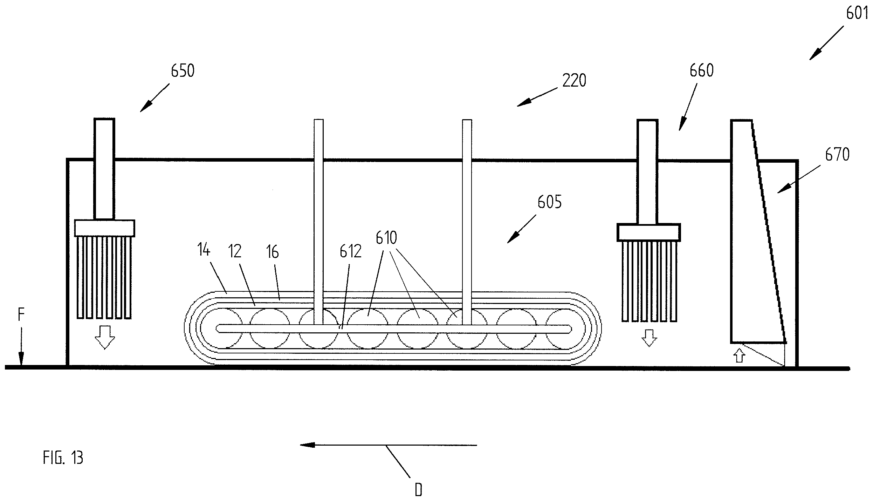

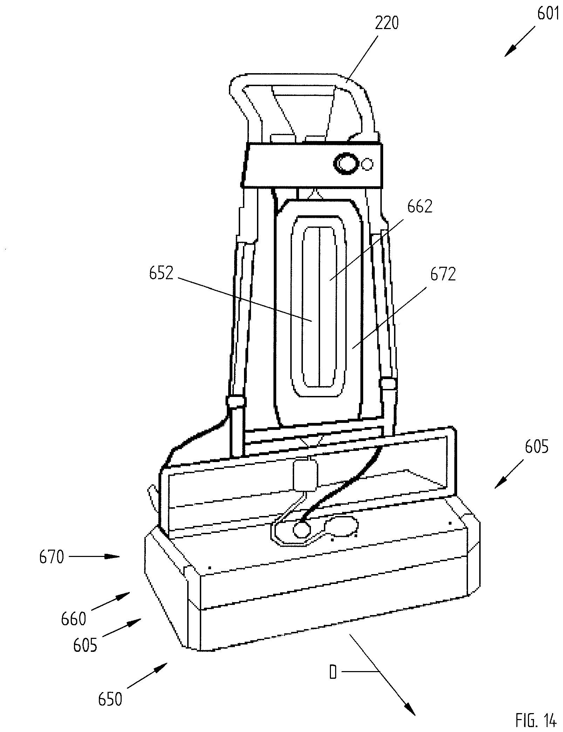

Figures 13 and 14 show a device 601 according to a variant embodiment of the invention.

In the drawings, characteristics and/or component parts corresponding or equivalent to those of previous embodiments are identified by the same reference numbers.

The device 601 according to said preferred embodiment of the invention preferably comprises an integrated device capable of carrying out a complete treatment in all its steps, from the supply of the electrolyte solution to the rinsing and cleaning steps after the treatment.

The device 601 is shown in its entirety in Figure 14, while Figure 13 schematically shows its component parts.

The device 601 preferably comprises a treatment unit 605 having a series of rollers 610 with a first layer 12, a second layer 14 and an intermediate layer 16 wound thereon so as to form a ring. The rollers 610 are coupled horizontally through supporting means 612 that extend upwards in a moving handle 220.

Said layers 12, 14, 16 have the same characteristics described above with reference to the device 1 of Figure 1, meaning that the first layer 12 serves as a cathode, the second layer 14 serves as an anode and the intermediate layer 16 allows the gradual passage of a solution containing an electrolyte.

The device 601 preferably comprises also power supply means, not illustrated herein.

The power supply means preferably comprise a DC power supply or an AC power supply with suitable transformer and rectifier. The power supply preferably comprises power supply batteries. In variant embodiments, the power supply can be connected to the electric network through a cable.

The power supply means preferably comprise a sliding contact that touches the first layer 12 (cathode) and a sliding contact adhering to the external surface of the second layer 14 (anode), so as to create the closed circuit for the passage of current in the electrochemical process.

The device 601 preferably comprises also a dispensing unit 650 suited to dispense an electrolyte solution. The dispensing unit 650 allows the solution to be dispensed/sprayed on the anode 14 or directly on the surface F to be treated upstream of the treatment unit 605 with reference to the advance direction D of the device 601. The electrolyte solution is preferably supplied to the dispensing unit 650 from a special tank 652, preferably comprising an interchangeable cartridge.

Preferably, the device 601 comprises also a washing/rinsing unit 660 for dispensing a washing liquid, preferably water. The washing unit 660 allows the washing/rinsing liquid to be dispensed/sprayed downstream of the treatment unit 605 with reference to the advance direction D of the device 601. The washing liquid dilutes any reaction residues until reaching such a concentration that allows them to be disposed of in the domestic/industrial sewage system.

The washing liquid is preferably supplied to the washing unit 660 from a special tank 662, preferably comprising an interchangeable cartridge.

The device 601 preferably comprises also a recovery unit 670 for the intake of the washing liquid and the washed residuum into a tank 672, preferably of the removable type.

The suction unit 670 is arranged downstream of the washing unit 660 with reference to the advance direction D of the device 601.

The surface treatment carried out with said device 601 takes place through the following operating process. Once the interchangeable cartridge 652 containing the electrolyte solution at the desired concentration has been connected, the dispensing unit 650 is activated. The device 601 is automatically pushed/moved along the desired direction D1 over the surface F to be treated and the treatment unit 605 carries out the surface treatment through an electrochemical process. The treatment through electrolysis ends when the concentration of oxygen in contact with the active electrolyte lowers below a given threshold.

The washing unit 660 starts working immediately afterwards, dispensing a water spray that dilutes any reaction residues until reaching such a concentration that allows them to be disposed of in the domestic sewage system. Finally, the recovery unit 670 sucks the "exhausted" solution and discharges it into the respective tank/cartridge 672.

Once full, the cartridge 672 can be removed and replaced with an empty one in order to continue with the treatment operations.

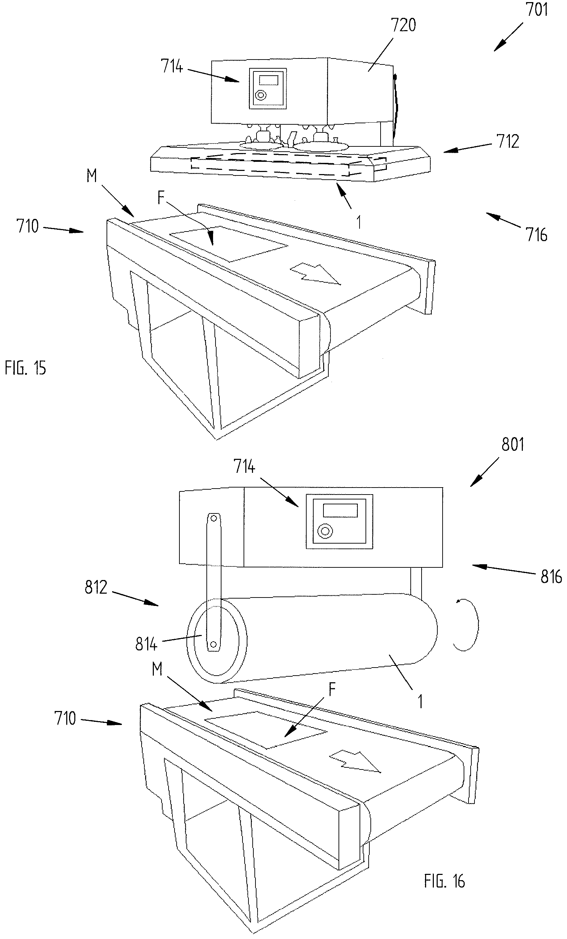

Figure 15 shows a piece of equipment 701 which makes it possible to treat the surface of a manufactured item M to increase its friction coefficient.

The manufactured item M may comprise, for example, a flooring tile, for example in marble, porcelain, stoneware, enamelled surfaces, for example ceramic tiles to be used indoors/outdoors, shower trays etc, or glass panes, which need an increase in their friction coefficient, preferably to give the item anti slip properties or make aesthetic modifications on the same.

The equipment 701 according to the invention is based on the same principle described above with reference to the use of the electrochemical process to act on the surface to be treated, and preferably uses a device as previously described. The equipment 701 comprises:
- supporting means 710 for the manufactured item M, preferably constituted by a conveyor belt;
- supporting means 712 for the treatment device 1;
- power supply means 714 for the cathode and the anode of the device 1; and
- moving means 716 suited to bring the device 1 in contact with the surface F of the manufactured item M to be treated.

The power supply means 714 preferably comprise a DC power supply or an AC power supply with suitable transformer and rectifier.

In the embodiment shown in the figure, the moving means 716 comprise a press 720 associated with the supporting means 712 of the device 1.

The device 1 is applied to the press 720 and is preferably pre-impregnated with the electrolyte solution, as explained above. In variant embodiments, the equipment 701 can be equipped with a suitable water dispenser to wet the device 1, in which case the latter comprises the electrolyte in the solid phase, or the equipment 701 can be equipped with a suitable dispenser for dispensing the electrolyte solution ready to wet the device, in which case the latter is without electrolyte.

During operation, the manufactured item M to be treated is made slide to the position where the treatment is applied through the conveyor belt 710 and is stopped in that position. The press 720 is then moved to make the device 1 adhere to the surface F to be treated through the exertion of pressure. Once the press 720 has been positioned, the application of current starts the electrochemical process that will modify the surface F as described above. Therefore, the current is applied with suitable intensity, with the correct quantity of charge and for the time required to obtain the desired treatment effectiveness. Once the treatment has been completed, the press 720 is lifted and the manufactured item M can be moved to a successive position through the conveyor belt 710.

In a preferred embodiment, the manufactured item M is moved to an area comprising washing means (not shown).

In this phase, the washing is carried out with a discrete quantity of water, in such a way as to remove any reaction residues, treating the surface F and cleaning the manufactured item M.

In a preferred embodiment, the manufactured item M is then moved to an area comprising packaging means for packaging the treated item.

The equipment 701 according to the invention thus makes it possible to implement an industrial process which is easily repeatable for making manufactured items M with treated surfaces.

Figure 16 shows a piece of equipment 801 according to a variant embodiment of the invention.

In the drawings, characteristics and/or component parts corresponding or equivalent to those of previous embodiments are identified by the same reference numbers.

The equipment 801 according to the invention is based on the same principle described above with reference to the use of the electrolytic process to act on the surface to be treated, and preferably uses a device as previously described, in such a way as to use the inventive concept in the context of an easily repeatable industrial process.

The equipment 801 comprises:
- supporting means 710 for the manufactured item M, preferably constituted by a conveyor belt;
- supporting means 812 for the treatment device 1;
- power supply means 714 for the cathode and the anode of the device 1; and
- moving means 816 suited to bring the device 1 in contact with the surface F of the manufactured item M to be treated.

The supporting means 812 for the treatment device 1 comprise a roller 814 with the treatment device 1 wound on its external surface.

In the embodiment shown in the figure, the moving means 816 comprise a system for lowering/lifting the roller 814.

The device 1 is applied to the roller 814 and is preferably pre-impregnated with the electrolyte solution, as explained above. In variant embodiments, the equipment 801 can be equipped with a suitable water dispenser to wet the device 1, in which case the latter comprises the electrolyte in the solid phase, or the equipment 801 can be equipped with a suitable dispenser for dispensing the electrolyte solution ready to wet the device, in which case the latter is without electrolyte.

During operation, the manufactured item M to be treated is made slide to the position where the roller 814 is located through the conveyor belt 710. The manufactured item M comes into contact with the device 1 wound on the roller 814 and is made adhere exerting a predetermined pressure. The conveyor belt 710 makes the manufactured item M slide with such a speed as to enable the execution of an effective surface modification treatment. Once the manufactured item M has come into contact with the device 1, the application of current starts the process that will modify the surface F as described above.

Therefore, the current is applied with suitable intensity, with the correct quantity of charge and for the time required to obtain the desired treatment effectiveness. Once the manufactured item M has moved beyond the roller 814, the treatment can be considered completed and the manufactured item M keeps advancing on the conveyor belt 710 to a successive position.

In a preferred embodiment, the manufactured item M is moved to an area comprising washing means (not shown) and possibly to an area comprising packaging means, analogously to what has been described above.

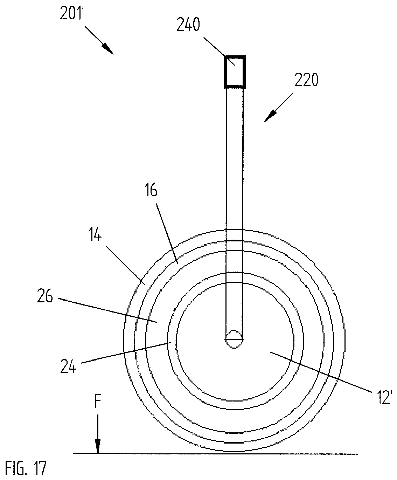

In the various embodiments previously described, the device or the equipment according to a main aspect of the invention comprises an electrochemical cell constituted by the three essential layers: cathode, anode and intermediate layer. In variant embodiments, however, further layers may be provided, which do not alter the effect of the treatment on the respective surface to be treated. By way of example, Figure 17 shows a device 201' according to a variant embodiment of the device 201 previously described with reference to Figure 7.

In the drawings, characteristics and/or component parts corresponding or equivalent to those of the previous embodiment are identified by the same reference numbers.

The device 201' according to said preferred embodiment of the invention preferably comprises a first layer 12' preferably serving as a cathode, a second layer 14 preferably serving as an anode and an intermediate layer 16.

The first layer 12' preferably coincides with the supporting means constituted by the roller 12'. The roller will be preferably made of an electrically conductive material.

A first additional layer 24 having the function to chemically insulate the roller/cathode from chemical aggression is wound around the roller/cathode 12' itself. The first additional layer 24 preferably comprises an electrically conductive polymer. This solution makes it possible to extend the life cycle of the roller/cathode. It should be noted that said insulating/protective layer can be present in all the embodiments described above.

A second additional conductive and absorbing layer 26 which serves the function of a tank for the electrolyte in the liquid phase is wound around the first additional layer 24. The second additional layer 26 preferably comprises carbon felt. It should be noted that said layer serving as a tank can be present in all the embodiments described above.

This embodiment advantageously extends the life cycle of the device, protecting the electrodes from any corrosion phenomena resulting from the direct contact with the electrolyte solution.

It has thus been shown that the present invention allows the set objects to be achieved.

In particular, the present invention makes it possible to overcome the problems related to the surface treatment systems known in the art. It has, in fact, been shown that the system according to the invention makes it possible to reduce or eliminate the environmental impact of the surface treatment, making it more "biocompatible" and safer.

It should be noted that all the described solutions can be equipped with suitable means for signalling the end of the treatment such as, for example, LED and/or acoustic warning devices or sensors suited to measure the degree of surface modification.

Furthermore, the various solutions can be preferably provided with suitable manual or automated adjusting means for adjusting the intensity of the current used in the electrolytic treatment. This makes it possible to influence the speed of the surface treatment.

Even though the present invention has been described with reference to the particular embodiments shown in the figures, it should be noted that the present invention is not limited to the particular embodiments represented and described herein; on the contrary, further variants of the embodiments described herein fall within the scope of the present invention, which is defined in the claims.

## Claims

1. Method for modifying the properties of the surface (F) of a material, said method comprising the following steps:
- preparing a first layer (12; 12') comprising an electrically conductive material suited to serve the function of a cathode, a second layer (14) comprising an electrically conductive material suited to serve the function of an anode and an intermediate layer (16) suited to become impregnated with an electrolyte in the liquid phase or to regulate its flow between said cathode and said anode;
- associating an electrolyte in the liquid phase with one or more of said layers (12, 14, 16);
- supplying power to said cathode and said anode in order to activate the electrochemical process of said electrolyte in the liquid phase for a predetermined time interval,
**characterized by**
- positioning said anode or said cathode on said surface (F) to be treated.

2. Method according to claim 1, **characterized in that** said step of positioning said cathode or said anode on said surface (F) to be treated comprises the positioning of said anode or said cathode in direct contact with said surface (F) to be treated.

3. Method according to claim 1 or 2, **characterized in that** said step of associating an electrolyte in the liquid phase with one or more of said layers (12, 14, 16) comprises first the step of associating an electrolyte in the solid phase with one or more of said layers (12, 14, 16) and successively the step of adding a liquid to form said electrolyte in the liquid phase.

4. Device (1; 101; 201; 201'; 301; 401; 501; 601) for modifying the properties of the surface (F) of a material, comprising:
- a first layer (12; 12') comprising an electrically conductive material suited to serve the function of a cathode;
- a second layer (14) comprising an electrically conductive material suited to serve the function of an anode;
- an intermediate layer (16) suited to become impregnated with an electrolyte in the liquid phase or to regulate its flow between said cathode and said anode;
at least one among said layers (12, 14, 16) being suited to receive an electrolyte in the liquid phase,
**characterized by**
said cathode or said anode being configured to be positioned on said surface (F) and to be supplied with power in order to activate the electrochemical process of said electrolyte for a predetermined time interval.

5. Device (1; 101; 201; 201'; 301; 401; 501; 601) according to claim 4 **characterized in that**
said at least one among said layers (12, 14, 16) being suited to receive an electrolyte in the liquid phase comprises at least one among said layers (12, 14, 16) being suited to be associated with an electrolyte in the solid phase and successively be added with a liquid to form said electrolyte in the liquid phase..

6. Device (1; 101; 201; 201'; 301; 401; 501; 601) according to claim 4 or 5, **characterized in that** said intermediate layer (16) comprises a porous layer.

7. Device (1; 101; 201; 201'; 301; 401; 501; 601) according to any of claims 4 to 6, **characterized in that** said at least one among said layers (12, 14, 16) comprises said electrolyte in the liquid phase or in the solid phase.

8. Device (101; 301) according to any of the claims from 4 to 7, **characterized in that** it comprises masking means (40) suited to be interposed between said anode or said cathode and said surface (F) to be treated, said masking means (40) comprising masking areas comprising material which is inert with respect to the chemical compounds of said electrolyte and open areas without material.

9. Device (1; 101; 201; 201'; 301; 401; 501; 601) according to any of the claims from 4 to 8, **characterized in that** said electrically conductive material of said first layer (12; 12') and/or said electrically conductive material of said second layer (14) comprise/s any of a metallic material, carbon, graphite cloth or graphite felt.

10. Device (1; 101; 201; 201'; 301; 401; 501; 601) according to any of the claims from 4 to 9, **characterized in that** said device comprises said electrolyte and said electrolyte comprises:
- at least one among the acid compounds/ions, or solutions containing said compounds/ions, belonging to the group comprising: perchloric acid, hydroiodic acid, hydrobromic acid, hydrochloric acid, sulphuric acid, nitric acid, iodic acid, oxalic acid, sulphurous acid, hydrogen sulphate ion, phosphoric acid, d-tartaric acid, lactic acid, citric acid, nitrous acid, hydrofluoric acid, hydrogen fluoride ion, formic acid, 1-ascorbic acid, benzoic acid, acetic acid, carbonic acid, hydrogen sulphite ion, hydrogen sulfide, dihydrogen phosphate ion, hypochlorous acid, boric acid, hydrogen carbonate ion, hydrogen sulfide ion,
hydrogen phosphate ion, malic acid; and/or
- at least one among the basic compounds/ions, or solutions containing said compounds/ions, comprising the hydroxyl ion; and/or
- at least one among the salts, or solutions containing said salts, belonging to the group comprising: perchlorate, iodide, bromide, chloride, sulfate, nitrate, iodate, oxalate, sulfite, bisulfate, phosphate, tartrate, lactate, citrate, nitrite, fluoride, bifluoride, formate, ascorbate, benzoate, acetate, carbonate, hydrogen sulfite, sulfide, dihydrogen phosphate, hypochlorite, borate, hydrogen carbonate, hydrogen sulfide, hydrogen phosphate, malate.

11. Device (1; 101; 201; 201'; 301; 401; 501; 601) according to any of the claims from 4 to 10, **characterized in that** it comprises power supply means (240) for said cathode and said anode.

12. Device (1; 101; 201; 201'; 301; 401; 501; 601) according to any of the claims from 4 to 11, **characterized in that** it comprises a sensor suited to measure the degree of surface modification.

13. Device (1; 101; 201; 201'; 301; 401; 501; 601) according to any of the claims from 4 to 12, **characterized in that** it comprises moving means (220), preferably a handle (220) or a mechanized system.

14. Device (1; 101; 201; 201'; 301; 401; 501; 601) according to any of the claims from 4 to 13, **characterized in that** it comprises supporting means (410A, 410B; 510A, 510B; 610) for said layers (12, 14, 16), preferably one or more supporting rollers.

15. Device (601) according to any of the claims from 4 to 14, **characterized in that** it comprises dispensing means (650) suited to dispense said electrolyte in the liquid phase or water dispensing means if said electrolyte is present in the solid phase and/or washing/rinsing means (660) and/or liquid suction means (670).

16. Equipment (701; 801) for modifying the properties of the surface (F) of a manufactured item (M), **characterized in that** it comprises a device (1) made according to any of the claims from 4 to 15,
- supporting means (710) for said manufactured item (M);
- supporting means (712; 812) for said device (1);
- power supply means (714) for said cathode and said anode of said device (1);
- moving means (716; 816) suited to place said device (1) in contact with said surface (F) of said manufactured item (M).

17. Equipment (701; 801) according to claim 16, **characterized in that** said supporting means (710) for said manufactured item (M) comprise a conveyor belt intended to move said manufactured item (M).

18. Equipment (701; 801) according to claim 16 or 17, **characterized in that** said moving means (716; 816) comprise a press (720) associated with said supporting means of said device (1).

19. Equipment (801) according to any of the claims from 16 to 18, **characterized in that** said supporting means (812) for said device (1) comprise one or more rollers (812).

20. Equipment (701; 801) according to any of the claims from 16 to 19, **characterized in that** it furthermore comprises washing means for said manufactured item (M) and/or packaging means for said treated manufactured item (M).

## Patentansprüche

1. Verfahren zur Modifizierung der Eigenschaften der Oberfläche (F) eines Materials, wobei das Verfahren die folgenden Schritte umfasst:
- Bereitstellen einer ersten Schicht (12; 12'), die ein elektrisch leitfähiges Material umfasst, das geeignet ist, die Funktion einer Kathode zu erfüllen, einer zweiten Schicht (14), die ein elektrisch leitfähiges Material umfasst, das geeignet ist, die Funktion einer Anode zu erfüllen, und einer Zwischenschicht (16), die geeignet ist, mit einem Elektrolyten in der flüssigen Phase imprägniert zu werden oder seinen Fluss zwischen der Kathode und der Anode zu regulieren;
- Assoziieren eines Elektrolyten in der flüssigen Phase mit einer oder mehreren der Schichten (12, 14, 16);
- Zuführen von Strom zu der Kathode und der Anode, um den elektrochemischen Prozess des Elektrolyten in der flüssigen Phase für ein vorbestimmtes Zeitintervall zu aktivieren,
**gekennzeichnet durch**
- das Positionieren der Anode oder der Kathode auf der zu behandelnden Oberfläche (F).

2. Verfahren nach Anspruch 1, **dadurch gekennzeichnet, dass** der Schritt des Positionierens der Kathode oder der Anode auf der zu behandelnden Oberfläche (F) das Positionieren der Anode oder der Kathode in direktem Kontakt mit der zu behandelnden Oberfläche (F) umfasst.

3. Verfahren nach Anspruch 1 oder 2, **dadurch gekennzeichnet, dass** der Schritt des Assoziierens eines Elektrolyten in der flüssigen Phase mit einer oder mehreren der Schichten (12, 14, 16) zunächst den Schritt des Assoziierens eines Elektrolyten in der festen Phase mit einer oder mehreren der Schichten (12, 14, 16) und anschließend den Schritt des Hinzugebens einer Flüssigkeit zur Bildung des Elektrolyten in der flüssigen Phase umfasst.

4. Vorrichtung (1; 101; 201; 201'; 301; 401; 501; 601) zur Modifizierung der Eigenschaften der Oberfläche (F) eines Materials, umfassend:
- eine erste Schicht (12; 12'), die ein elektrisch leitfähiges Material umfasst, das geeignet ist, die Funktion einer Kathode zu erfüllen;
- eine zweite Schicht (14), die ein elektrisch leitfähiges Material umfasst, das geeignet ist, die Funktion einer Anode zu erfüllen;
- eine Zwischenschicht (16), die geeignet ist, mit einem Elektrolyten in der flüssigen Phase imprägniert zu werden oder seinen Fluss zwischen der Kathode und der Anode zu regulieren;
wobei mindestens eine der Schichten (12, 14, 16) geeignet ist, einen Elektrolyten in der flüssigen Phase zu empfangen,
**dadurch gekennzeichnet, dass**
die Kathode oder die Anode so konfiguriert ist, dass sie auf der Oberfläche (F) positioniert ist und mit Strom versorgt wird, um den elektrochemischen Prozess des Elektrolyten für ein vorbestimmtes Zeitintervall zu aktivieren.

5. Vorrichtung (1; 101; 201; 201'; 301; 401; 501; 601) nach Anspruch 4 , **dadurch gekennzeichnet, dass**
das mindestens eine der Schichten (12, 14, 16), die geeignet ist, einen Elektrolyten in der flüssigen Phase zu empfangen, mindestens eine der Schichten (12, 14, 16) umfasst, die geeignet ist, mit einem Elektrolyten in der festen Phase assoziiert zu werden und anschließend mit einer Flüssigkeit zur Bildung des Elektrolyten in der flüssigen Phase ergänzt zu werden.

6. Vorrichtung (1; 101; 201; 201'; 301; 401; 501; 601) nach Anspruch 4 oder 5, **dadurch gekennzeichnet, dass** die Zwischenschicht (16) eine poröse Schicht umfasst.

7. Vorrichtung (1; 101; 201; 201'; 301; 401; 501; 601) nach einem der Ansprüche 4 bis 6, **dadurch gekennzeichnet, dass** die mindestens eine der Schichten (12, 14, 16) den Elektrolyten in der flüssigen Phase oder in der festen Phase umfasst.

8. Vorrichtung (101; 301) nach einem der Ansprüche 4 bis 7, **dadurch gekennzeichnet, dass** sie Maskierungsmittel (40) umfasst, die geeignet sind, zwischen der Anode oder der Kathode und der zu behandelnden Oberfläche (F) angeordnet zu werden, wobei die Maskierungsmittel (40) Maskierungsbereiche, die Material umfassen, das in Bezug auf die chemischen Verbindungen des Elektrolyten inert ist, und offene Bereiche ohne Material umfassen.

9. Vorrichtung (1; 101; 201; 201'; 301; 401; 501; 601) nach einem der Ansprüche 4 bis 8, **dadurch gekennzeichnet, dass** das elektrisch leitfähige Material der ersten Schicht (12; 12') und/oder das elektrisch leitfähige Material der zweiten Schicht (14) ein metallisches Material, Kohlenstoff, Graphitgewebe oder Graphitfilz umfasst(en).

10. Vorrichtung (1; 101; 201; 201'; 301; 401; 501; 601) nach einem der Ansprüche 4 bis 9, **dadurch gekennzeichnet, dass** die Vorrichtung den Elektrolyten umfasst und der Elektrolyt umfasst:
- mindestens eine der sauren Verbindungen/Ionen oder Lösungen, die diese Verbindungen/Ionen enthalten, die der Gruppe gehören, die umfasst: Perchlorsäure, Jodwasserstoffsäure, Bromwasserstoffsäure, Salzsäure, Schwefelsäure, Salpetersäure, Jodsäure, Oxalsäure, schweflige Säure, Schwefelwasserstoff-Ion, Phosphorsäure, d-Weinsäure, Milchsäure, Zitronensäure, salpetrige Säure, Flusssäure, Fluorwasserstoff-Ion, Ameisensäure, L-Ascorbinsäure, Benzoesäure, Essigsäure, Kohlensäure, Hydrogensulfit-Ion, Schwefelwasserstoff, Dihydrogenphosphat-Ion, hypochlorige Säure, Borsäure, Hydrogencarbonat-Ion, Schwefelwasserstoff-Ion, Hydrogenphosphat-Ion, Äpfelsäure; und/oder
- mindestens eine der basischen Verbindungen/Ionen oder Lösungen, die diese Verbindungen/Ionen enthalten, die das Hydroxyl-Ion umfassen; und/oder
- mindestens eines der Salze oder Lösungen, die diese Salze enthalten, die der Gruppe gehören, die umfasst: Perchlorat, Iodid, Bromid, Chlorid, Sulfat, Nitrat, Iodat, Oxalat, Sulfit, Bisulfat, Phosphat, Tartrat, Lactat, Citrat, Nitrit, Fluorid, Bifluorid, Formiat, Ascorbat, Benzoat, Acetat, Carbonat, Hydrogensulfit, Sulfid, Dihydrogenphosphat, Hypochlorit, Borat, Hydrogencarbonat, Schwefelwasserstoff, Hydrogenphosphat, Malat.

11. Vorrichtung (1; 101; 201; 201'; 301; 401; 501; 601) nach einem der Ansprüche 4 bis 10, **dadurch gekennzeichnet, dass** sie Stromversorgungsmittel (240) für die Kathode und die Anode umfasst.

12. Vorrichtung (1; 101; 201; 201', 301; 401; 501; 601) nach einem der Ansprüche 4 bis 11, **dadurch gekennzeichnet, dass** sie einen Sensor umfasst, der geeignet ist,
den Grad der Oberflächenmodifizierung zu messen.

13. Vorrichtung (1; 101; 201; 201'; 301; 401; 501; 601) nach einem der Ansprüche 4 bis 12, **dadurch gekennzeichnet, dass** sie Bewegungsmittel (220), vorzugsweise einen Griff (220) oder ein mechanisiertes System, umfasst.

14. Vorrichtung (1; 101; 201; 201'; 301; 401; 501; 601) nach einem der Ansprüche 4 bis 13, **dadurch gekennzeichnet, dass** sie Stützmittel (410A, 410B; 510A, 510B; 610) für die Schichten (12, 14, 16), vorzugsweise eine oder mehrere Stützrollen, umfasst.

15. Vorrichtung (601) nach einem der Ansprüche 4 bis 14, **dadurch gekennzeichnet, dass**
sie Abgabemittel (650), die geeignet sind, den Elektrolyten in der flüssigen Phase abzugeben, oder Wasserabgabemittel, wenn der Elektrolyt in der festen Phase vorliegt, und/oder Wasch-/Spülmittel (660) und/oder Flüssigkeitssaugmittel (670) umfasst.

16. Ausrüstung (701; 801) zur Modifizierung der Eigenschaften der Oberfläche (F) eines hergestellten Artikels (M), **dadurch gekennzeichnet, dass** sie eine Vorrichtung (1), die nach einem der Ansprüche 4 bis 15 ausgebildet ist,
- Stützmittel (710) für den hergestellten Artikel (M);
- Stützmittel (712; 812) für die Vorrichtung (1);
- Stromversorgungsmittel (714) für die Kathode und die Anode der Vorrichtung (1);
- Bewegungsmittel (716; 816), die geeignet sind, die Vorrichtung (1) in Kontakt mit der Oberfläche (F) des hergestellten Artikels (M) zu bringen, umfasst.

17. Ausrüstung (701; 801) nach Anspruch 16, **dadurch gekennzeichnet, dass** die Stützmittel (710) für den hergestellten Artikel (M) ein Förderband umfassen, das dazu bestimmt ist, den hergestellten Artikel (M) zu bewegen.

18. Ausrüstung (701; 801) nach Anspruch 16 oder 17, **dadurch gekennzeichnet, dass** die Bewegungsmittel (716; 816) eine Presse (720) umfassen, die mit den Stützmitteln der Vorrichtung (1) assoziiert ist.

19. Ausrüstung (801) nach einem der Ansprüche 16 bis 18, **dadurch gekennzeichnet, dass** die Stützmittel (812) für die Vorrichtung (1) eine oder mehrere Rollen (812) umfassen.

20. Ausrüstung (701; 801) nach einem der Ansprüche 16 bis 19, **dadurch gekennzeichnet, dass** sie ferner Waschmittel für den hergestellten Artikel (M) und/oder Verpackungsmittel für den behandelten hergestellten Artikel (M) umfasst.

## Revendications

1. Procédé de modification de propriétés de surfaces (F) de matériaux, ledit procédé comprenant les étapes suivantes :
- la préparation d'une première couche (12 ; 12') comprenant un matériau électriquement conducteur pouvant remplir la fonction de cathode, une seconde couche (14) comprenant un matériau électriquement conducteur pouvant remplir la fonction d'anode et une couche intermédiaire (16) pouvant s'imprégner d'un électrolyte en phase liquide ou réguler son écoulement entre ladite cathode et ladite anode ;
- l'association d'un électrolyte en phase liquide à une ou plusieurs desdites couches (12, 14, 16) ;
- l'alimentation de ladite cathode et ladite anode afin d'activer le processus électrochimique dudit électrolyte en phase liquide pendant un intervalle de temps prédéterminé,
**caractérisé par**
- le positionnement de ladite anode ou ladite cathode sur ladite surface (F) à traiter.

2. Procédé selon la revendication 1, **caractérisé en ce que** ladite étape de positionnement de ladite cathode ou de ladite anode sur ladite surface (F) à traiter comprend le positionnement de ladite anode ou de ladite cathode en contact direct avec ladite surface (F) à traiter.

3. Procédé selon la revendication 1 ou 2, **caractérisé en ce que** ladite étape d'association d'un électrolyte en phase liquide avec une ou plusieurs desdites couches (12, 14, 16) comprend d'abord l'étape d'association d'un électrolyte en phase solide avec une ou plusieurs desdites couches (12, 14, 16) et successivement l'étape d'ajout d'un liquide pour former ledit électrolyte en phase liquide.

4. Dispositif (1 ; 101 ; 201 ; 201 ; 301 ; 401 ; 501 ; 601) de modification de propriétés de surfaces (F) de matériaux, comprenant :
- une première couche (12 ; 12') comprenant un matériau électriquement conducteur pouvant remplir la fonction de cathode ;
- une seconde couche (14) comprenant un matériau électriquement conducteur pouvant remplir la fonction d'anode ;
- une couche intermédiaire (16) pouvant s'imprégner d'un électrolyte en phase liquide ou réguler son écoulement entre ladite cathode et ladite anode ;
au moins une desdites couches (12, 14, 16) pouvant recevoir un électrolyte en phase liquide,
**caractérisé par**
ladite cathode ou ladite anode étant configurée pour être positionnée sur ladite surface (F) et pour être alimentée en énergie afin d'activer le processus électrochimique dudit électrolyte pendant un intervalle de temps prédéterminé.

5. Dispositif (1 ; 101 ; 201 ; 201", 301 ; 401 ; 501 ; 601) selon la revendication 4 **caractérisé en ce que**
ladite au moins une parmi lesdites couches (12, 14, 16) pouvant recevoir un électrolyte en phase liquide comprend au moins une parmi lesdites couches (12, 14, 16) pouvant être associée à un électrolyte en phase solide et être successivement additionnée d'un liquide pour former ledit électrolyte en phase liquide.

6. Dispositif (1 ; 101 ; 201 ; 201 ; 301 ; 401 ; 501 ; 601) selon la revendication 4 ou 5, **caractérisé en ce que** ladite couche intermédiaire (16) comprend une couche poreuse.

7. Dispositif (1 ; 101 ; 201 ; 201 ; 301 ; 401 ; 501 ; 601) selon l'une quelconque des revendications 4 à 6, **caractérisé en ce que** ladite au moins une parmi lesdites couches (12, 14, 16) comprend ledit électrolyte en phase liquide ou en phase solide.

8. Dispositif (101 ; 301) selon l'une quelconque des revendications de 4 à 7, **caractérisé en ce qu'**il comprend des moyens de masquage (40) pouvant être interposés entre ladite anode ou ladite cathode et ladite surface (F) à traiter, lesdits moyens de masquage (40) comprenant des zones de masquage comprenant un matériau inerte vis-à-vis des composés chimiques dudit électrolyte et des zones ouvertes dépourvues de matériau.

9. Dispositif (1 ; 101 ; 201 ; 201' ; 301 ; 401 ; 501 ; 601) selon l'une quelconque des revendications de 4 à 8, **caractérisé en ce que** ledit matériau électriquement conducteur de ladite première couche (12 ; 12') et/ou ledit matériau électriquement conducteur de ladite seconde couche (14) comprend un matériau métallique, du carbone, un tissu de graphite ou un feutre de graphite.

10. Dispositif (1 ; 101; 201 ; 201", 301 ; 401 ; 501 ; 601) selon l'une quelconque des revendications de 4 à 9, **caractérisé en ce que** ledit dispositif comprend ledit électrolyte et ledit électrolyte comprend :
- au moins un des composés/ions d'acide, ou des solutions contenant lesdits composés/ions, appartenant au groupe comprenant : l'acide perchlorique, l'acide iodhydrique, l'acide bromhydrique, l'acide chlorhydrique, l'acide sulfurique, l'acide nitrique, l'acide iodique, l'acide oxalique, l'acide sulfureux, l'ion sulfate d'hydrogène, l'acide phosphorique, l'acide d-tartrique, l'acide lactique, l'acide citrique, l'acide nitreux, l'acide fluorhydrique, l'ion fluorure d'hydrogène, l'acide formique, l'acide l-ascorbique, l'acide benzoïque, l'acide acétique, l'acide carbonique, l'ion sulfite d'hydrogène, le sulfure d'hydrogène, l'ion dihydrogénophosphate, l'acide hypochloreux, l'acide borique, l'ion carbonate d'hydrogène, l'ion sulfure d'hydrogène, l'ion phosphate d'hydrogène, l'acide malique ; et/ou
- au moins un des composés/ions basiques, ou des solutions contenant lesdits composés/ions, comprenant l'ion hydroxyle ; et/ou
- au moins un des sels, ou des solutions contenant lesdits sels, appartenant au groupe comprenant : perchlorate, iodure, bromure, chlorure, sulfate, nitrate, iodate, oxalate, sulfite, bisulfate, phosphate, tartrate, lactate, citrate, nitrite, fluorure, bifluorure, formate, ascorbate, benzoate, acétate, carbonate, sulfite d'hydrogène, sulfure, phosphate dihydrogène, hypochlorite, borate, carbonate d'hydrogène, sulfure d'hydrogène, phosphate d'hydrogène, malate.

11. Dispositif (1; 101; 201 ; 201' ; 301 ; 401 ; 501 ; 601) selon l'une quelconque des revendications de 4 à 10, **caractérisé en ce qu'**il comprend des moyens d'alimentation (240) pour ladite cathode et ladite anode.

12. Dispositif (1 ; 101; 201 ; 201", 301 ; 401 ; 501 ; 601) selon l'une quelconque des revendications de 4 à 11, **caractérisé en ce qu'**il comprend un capteur pouvant mesurer le
degré de modification de surface.

13. Dispositif (1 ; 101 ; 201 ; 201' ; 301 ; 401 ; 501 ; 601) selon l'une quelconque des revendications de 4 à 12, **caractérisé en ce qu'**il comprend des moyens de déplacement (220), de préférence une poignée (220) ou un système mécanisé.

14. Dispositif (1 ; 101; 201 ; 201", 301 ; 401 ; 501 ; 601) selon l'une quelconque des revendications de 4 à 13, **caractérisé en ce qu'**il comprend des moyens de support (410A, 410B ; 510A, 510B ; 610) pour lesdites couches (12, 14, 16), de préférence un ou plusieurs rouleaux de support.

15. Dispositif (601) selon l'une quelconque des revendications 4 à 14, **caractérisé en ce qu'**
il comprend des moyens de distribution (650) pouvant distribuer ledit électrolyte en phase liquide ou des moyens de distribution d'eau si ledit électrolyte est présent en phase solide et/ou des moyens de lavage/rinçage (660) et/ou des moyens d'aspiration de liquide (670).

16. Équipement (701 ; 801) de modification de propriétés de surfaces (F) d'un article manufacturé (M), **caractérisé en ce qu'**il comprend un dispositif (1) fabriqué selon l'une quelconque des revendications de 4 à 15,
- des moyens de support (710) pour ledit article manufacturé (M) ;
- des moyens de support (712 ; 812) pour ledit dispositif (1) ;
- des moyens d'alimentation (714) pour ladite cathode et ladite anode dudit dispositif (1) ;
- des moyens de déplacement (716 ; 816) pouvant placer ledit dispositif (1) en contact avec ladite surface (F) dudit article manufacturé (M).

17. Équipement (701 ; 801) selon la revendication 16, **caractérisé en ce que** lesdits moyens de support (710) pour ledit article manufacturé (M) comprennent un convoyeur destiné à déplacer ledit article manufacturé (M).

18. Équipement (701 ; 801) selon la revendication 16 ou 17, **caractérisé en ce que** lesdits moyens de déplacement (716 ; 816) comprennent une presse (720) associée auxdits moyens de support dudit dispositif (1).

19. Équipement (801) selon l'une quelconque des revendications de 16 à 18, **caractérisé en ce que** lesdits moyens de support (812) pour ledit dispositif (1) comprennent un ou plusieurs rouleaux (812).

20. Équipement (701 ; 801) selon l'une quelconque des revendications de 16 à 19, **caractérisé en ce qu'**il comprend en outre des moyens de lavage pour ledit article manufacturé (M) et/ou des moyens d'emballage pour ledit article manufacturé traité (M).
